# EUROPÄISCHE PATENTANMELDUNG

(11) **EP 1 491 085 A1**
(43) Veröffentlichungstag der Anmeldung: **29.12.2004**
(21) Anmeldenummer: 04014337.2
(22) Anmeldetag: 18.06.2004
(51) Int. Cl.: A01F 15/00, B30B 11/20

(54) **Vorrichtung zum gleichzeitigen Verdichten und Rollen von Materialien aus Halmgut oder aus faserförmigen Strukturen**

(30) Priorität: 21.06.2003 DE 20309561 U; 27.03.2004 DE 102004015145
(71) Anmelder: Strothmann, Eckhard, 33790 Halle (DE)
(72) Erfinder: Strothmann, Eckhard, 33790 Halle (DE)

(57) **Zusammenfassung**

Zur Bergung und Verwendung von Materialien aus Halmgut oder aus faserfönnigen Strukturen, wird ein Verfahren vorgesehen, welches die zu verarbeitenden Güter vorzugsweise mittels mobiler Maschinen auf den Feldern einsammelt und zu Röllchen verarbeitet, die als Futtermittel, als Einstreu oder auch als Brennstoff verwendet werden können.

## Beschreibung

Die Erfindung betrifft eine Vorrichtung zum gleichzeitigen Verdichten und Rollen von Materialien aus Halmgut oder faserförmigen Strukturen, wie zum Beispiel Stroh oder Raufutter, wobei die Erstellung einer Röllchenform angestrebt wird, die beispielsweise einen Durchmesser im einstelligen, unteren Zentimeterbereich und eine Länge bis zu etwa zwanzig Zentimetern aufweist.

Die neuartigen Röllchen sollen insbesondere in landwirtschaftlichen Bereichen, wie Fütterung und Aufstallung von Vieh, Verwendung finden und in einer losen Schüttgutkette verarbeitet werden können.

Vergleichbare Verfahren sind zur Zeit nicht bekannt.

Zum Füttern sind zwar in relativ aufwendigen Verfahren hergestellte Pellets als Preßlinge in Röllchenform bekannt, sie sind als Futtermittelzusatz gedacht. Die Herstellung der Pellets durch Mahlen, Zugabe von Bindemitteln und Verpressen unter hohem Druck, macht eine leistungsfähige, kostengünstige Herstellung kaum möglich. Die Herstellung von Pellets, auf dem Feld, eingebunden in ein Ernteverfahren, ist zur Zeit nicht wirtschaftlich durchführbar.

Die zur Zeit gängigen Verfahren bei der Einbringung von Halmfutter, wie mit Ladewagen, Rundoder Quaderballenpressen, Feldhäcksler, etc, ergeben zwar eine zufriedenstellende Erntekapazität, die Verwertung der Erntegüter ist jedoch nicht bei allen Tierarten problemlos. Durch Staubaufnahme und Staubbildung des Ernteguts sind zum Beispiel Anwendungen im Bereich von Pferde haltenden Betrieben, durch Staubbelastungen, die zum Staubhusten führen, sehr schädlich. Durch Nachgärungen und Schimmelbildung, im gelagerten Erntegut, verringert sich die Futterqualität oft merklich.

Durch die Futterernte mit der erfindungsgemäßen Vorrichtung werden zwischen den vorgenannten Verfahren neue Anwendungsmöglichkeiten erschlossen. Durch bessere hygroskopische Eigenschaften, der in ihrer Futterstruktur zur Oberflächenvergrößerung aufgerauten Röllchen, wird die Saugfähigkeit um ein vielfaches verbessert. Bei der Formung des Materials zu Röllchen werden Staubpartikel beim Einrollen und Verdichten wirkungsvoll eingeschlossen. Gegenüber losem Gut, zum Beispiel von Ladewagen geerntetem, werden Transport- und Lagerungskapazitäten durch ein geringeres Volumen erhöht und die Futterqualität heraufgesetzt. Die Verfütterung in Röllchenform ist unproblematisch. Die Röllchen können auch als Einstreu verwendet werden, hierbei ist durch ihre zerfaserte Struktur eine schnellere Verrottung bei der Entsorgung möglich.

Außer im landwirtschaftlichen, ist die Verwertung auch in anderen Bereichen möglich. So sind Röllchen auch als Brennstoff in Feuerungsanlagen verwertbar.

Die Erfindung wird nachstehend an einem Beispiel beschrieben und in den Zeichnungen dargestellt.

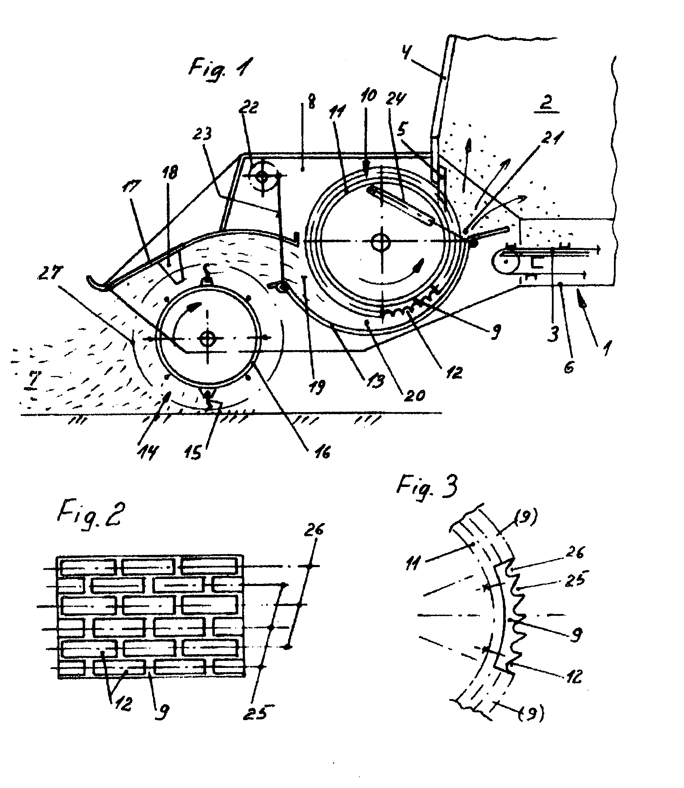

Fig. 1 zeigt die am Vorderteil eines Fahrzeugs angeordnete Vorrichtung.
Fig. 2 zeigt die Draufsicht auf ein schalenförmiges Segment.

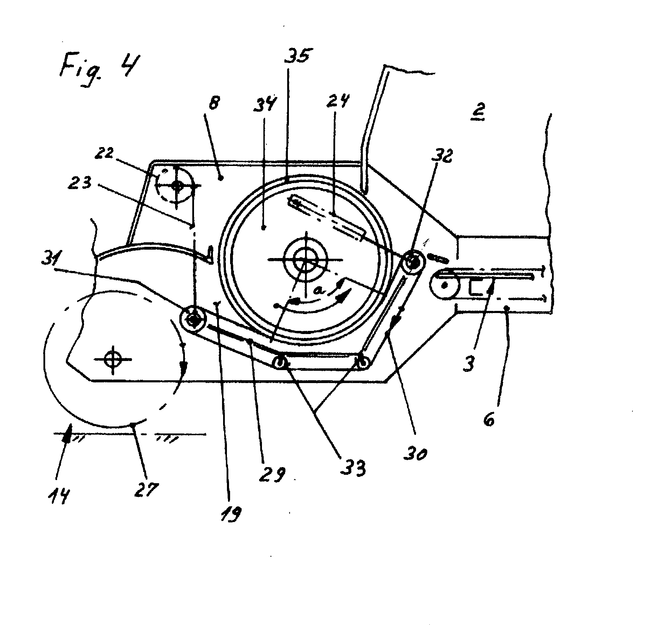

Fig. 3 zeigt eine Seitenansicht zu Fig. 2.
Fig. 4 zeigt eine weitere Ausführung mit einem umlaufenden Reibband.

Ein nur teilweise dargestelltes Fahrzeug (1), welches hinter einem Schlepper angehängt werden kann oder als Selbstfahrer verfahrbar ist, trägt an seinem Vorderteil, hier im wesentlichen dargestellt durch den kastenförmigen Laderaum (2), welcher nach unten von dem Kratzboden (3) und vorn durch die Stirnwand (4) begrenzt wird, die Vorrichtung (10) zum gleichzeitigem Verdichten und Rollen von Materialien. Diese Vorrichtung (10) besteht im wesentlichen aus dem Rotor (11), der an seiner walzenförmigen Oberfläche mit axial verlaufenden, durchgehenden oder unterbrochenen Nuten (12) versehen ist und dem verstellbaren Reibboden (13). Dem Rotor (11) und dem Reibboden (13) ist eine Aufnahmevorrichtung (14) vorgeordnet, deren Walze (16), ähnlich den Walzen von Schlegelfeldhäckslern, mit pendelnd aufgehängten Messern (15) besetzt ist. Ein Leitblech (17), mit daran angeordneten Gegenschneiden (18),die zwischen den Messern (15) bis in deren Umlaufbahn (27) ragen, ist oberhalb der Walze (16) angebracht. Fahrzeugrahmen (6) und Seitenwände (8) sind starr miteinander verbunden und besitzen in etwa die gleiche Breite. Alle bewegten Aggregate werden von der Zapfwelle eines Schleppers oder von einem Aufbaumotor, über mechanische oder hydraulische Getriebe angetrieben.

Während des Einsatzes nimmt das vorwärtsfahrende Fahrzeug mit den schlegelförmigen Messern (15) der rotierenden Walze (16), das in einem Schwad (7) liegende Material, zum Beispiel Stroh, auf und fördert es, entlang des Leitblechs (17) und zwischen den Gegenschneiden (18) hindurch, in die Eintrittsöffnung (19). Während dieses Vorgangs wird das Material geknickt und zerfasert, was die anschließende Weiterverarbeitung begünstigt.
In der Eintrittsöffnung (19) wird das Material von dem profilierten Rotor (11) erfasst und in den sich nach hinten verjüngenden Kanal (20) eingezogen, welcher durch den Reibboden (13) gebildet wird. Durch die keilförmige Verjüngung des Kanals (20) verdichtet sich das zu verarbeitende Material, es wird in die Nuten (12), des Rotors (11), gedrängt und beginnt sich am Reibboden (13) abzurollen.
In den Nuten (12) bilden sich Röllchen, die sich zunehmend verdichten. Durch die zerfaserten Strukturen des Materials werden, unter sich durch Fasern verbundene Röllchen, weitgehend voneinander getrennt. An der Austrittsöffnung (21) werden die erzeugten Röllchen in den Laderaum (2) gefördert. Beim Eintritt in den Laderaum (2), wird die Ablösung der Röllchen durch Abstreifer (5) an der Stirnwand (4) unterstützt. Die Röllchen die teilweise an der Stirnwand (4) aufsteigen oder auf den Kratzboden (3) fallen, werden nach der Erreichung einer bestimmten Höhe oder eines bestimmten Gegendrucks, in bekannter Weise, vom Kratzboden (3) tiefer in den Laderaum (2) geschoben.

Je nach Stroh- oder Halmfutterart können durch Verstellung des Reibbodens (13), die Eintrittsöffiaung (19) oder die Austrittsöffnung (21) des Kanals (20), den Einsatzbedingungen angepasst werden. Ferner wird dadurch bei unvorhergesehenen Verstopfungen im Kanal (20) die Säuberung erleichtert. Die Verstellung der Eintrittsöffnung (19) erfolgt über eine Kurbel oder Exzenterscheibe (22) und mittels einer Pleuelstange (23). Die Verstellung der Austrittsöffnung (21) erfolgt über einen Hydrozylinder (24).
In vielen Einsatzfällen ist es vorteilhaft, zur besseren Materialübergabe und zur Leistungssteigerung, den Reibboden (13) stetig auf und ab zu bewegen. Dieses wird durch eine rotierende Exzenterscheibe (22) ermöglicht, die über die Pleuelstange (23) die Eintrittsöffnung (19) laufend erweitert und verengt.
Die Länge der Röllchen kann durch die Form der Nuten (12) bestimmt werden. Bei axial über die volle Breite des Rotors (11) verlaufenden Nuten (12), werden Messer eingesetzt, die an die Stelle der Abstreifer (5) treten. Die Länge und Form der Röllchen kann auch durch die

Anordnung und die Form der Nuten (12) bestimmt werden. Hierbei werden die Nuten (12), mit vorgegebenen Längen, vorzugsweise versetzt und parallel zueinander, auf Reihen (25) und (26), angeordnet. Der Grund der Nuten (12) ist kreisbogenförmig ausgebildet, wobei der Querschnitt der Nuten (12) u-förmig gestaltet ist oder auch, von der kreisbogenförmigen Rundung ausgehend, v-förmig gestaltet sein kann.
Zur schnellen Anpassung an verschiedene Einsatzfälle und zum schnellen Austausch bei Verschleiß, sind die Nuten (12) in kreisbogenförmigen Segmenten (9) zusammengefasst, welche am zylindrischen Mantel des Rotors (11) auswechselbar angeordnet sind.
Um die zum Rollen führende Wirkung des Reibbodens (13) zu beeinflussen, kann die Innenseite desselben mit einer aufgerauten Struktur oder mit einer Profilierung versehen werden.

In einem weiteren Beispiel wird, zur Verbesserung der Arbeitsweise dargestellt, wie ein Rotor (34), der mit einem vorzugsweise aus Gummi oder Kautschuk bestehenden Mantel (35) umgeben ist, an Stelle des Reibbodens (13), mit einem umlaufenden Reibband (30) zusammenwirkt. Hierbei wird die Gefahr von Stauungen im Einzugsbereich (19) verringert. Da die Umfangsgeschwindigkeit des Rotors (34) und die Laufgeschwindigkeit des Reibbandes (30) hierbei unterschiedlich ausgelegt werden können, wird ferner die Neigung zur Röllchenbildung, durch verbesserte Einleitung des Rollvorgangs, begünstigt.
Das Reibband (30) läuft um die am Gestell (29) angeordneten Rollen (31) und (32), die Führungsrollen (33) und umschlingt im Bereich des Winkels (a) einen Teil des Rotors (34). Mindestens eine der Rollen (31)oder (32) oder eine der Führungsrollen (33), kann als Spannrolle ausgebildet sein. Der Antrieb durch Reibübertragung, direkt vom Rotor (34), ist möglich.
Da jedoch eine gegenüber der Umfangsgeschwindigkeit des Rotors (34) erhöhte oder verringerte Laufgeschwindigkeit des Reibbandes (30) die Arbeitsweise verbessert und die Anpassung an unterschiedliche Einsatzbedingungen erleichtert, ist ein separater Antrieb des Reibbandes (30), vorzugsweise über die Rolle (32) vorgesehen, welche zur Einstellung variabler Geschwindigkeiten mittels eines mechanisch oder hydraulisch verstellbaren Variators angetrieben wird.
Reibband (30) und/oder Rotor (34) sind an den aneinander liegenden Seiten mit Profilierungen versehen..
Der Antrieb des Rotors (11) oder (34) ist ebenfalls variabel gestaltbar.

## Patentansprüche

1. Vorrichtung zum gleichzeitigen Verdichten und Rollen von Materialien aus Halmgut oder aus faserförmigen Strukturen, wie zum Beispiel Stroh oder Raufutter, **dadurch gekennzeichnet, dass** ein an seiner zylindrischen Oberfläche mit axial in Reihen (25) und (26) ausgerichteten, dicht aneinander liegenden, profilierten Nuten (12) ausgestatteter Rotor (11) und ein Reibboden (13), einen Kanal (20) bilden, der sich von der Eintrittsöffnung (19) in Richtung zur Austrittsöffnung verjüngt.

2. Vorrichtung nach Anspruch 1, **dadurch gekennzeichnet, dass** eine Aufnahmeeinrichtung (14) das Halmgut aufnimmt und an einem Leitblech (17) entlang, der Eintrittsöffnung (19) zuführt.

3. Vorrichtung nach den Ansprüchen 1 und 2, **dadurch gekennzeichnet, dass** die Aufnahmeeinrichtung (14) aus einer Walze (16) mit pendelnd aufgehängten Messern (15) besteht.

4. Vorrichtung nach den Ansprüchen 1 - 3, **dadurch gekennzeichnet, dass** in die Umlaufbahn (27) der Messer (15), zwischen diesen, Gegenschneiden (18) hineinragen.

5. Vorrichtung nach den Ansprüchen 1 - 4, **dadurch gekennzeichnet, dass** über eine Exzenterscheibe (22) und eine Pleuelstange (23), die Eintrittsöffnung (19) des Kanals (20) vergrößert oder verkleinert werden kann.

6. Vorrichtung nach den Ansprüchen 1 - 5, **dadurch gekennzeichnet, dass** durch eine rotierende Exzenterscheibe (22), die Eintrittsöffnung (19) kontinuierlich vergrößert und verkleinert wird.

7. Vorrichtung nach Anspruch 1, **dadurch gekennzeichnet, dass** die Nuten (12), des Rotors (11), in am Rotormantel befestigten, auswechselbaren Segmenten (9), eingelassen sind.

8. Vorrichtung nach den Ansprüchen 1 und 7, **dadurch gekennzeichnet, dass** in den auswechselbaren Segmenten (9), in axial ausgerichteten Reihen (25) und (26), in der Länge begrenzte Nuten (12), versetzt zueinander, angeordnet sind.

9. Vorrichtung nach den Ansprüchen 1, 7 und 8, **dadurch gekennzeichnet, dass** der Querschnitt der Nuten (12) u-förmig gestaltet ist.

10. Vorrichtung nach den Ansprüchen 1 und 7-9, **dadurch gekennzeichnet, dass** der Querschnitt der Nuten (12) sich v-förmig erweitert.

11. Vorrichtung nach den Ansprüchen 1 und 7-10, **dadurch gekennzeichnet, dass** die Nuten (12) im Nutgrund ausgerundet sind.

12. Vorrichtung nach den Ansprüchen 1 und 7-11, **dadurch gekennzeichnet, dass** Abstreifer (5) in umlaufende Rillen des Rotors (11) eingreifen,

13. Vorrichtung nach den Ansprüchen 1 und 5-12, **dadurch gekennzeichnet, dass** die Austrittsöffnung (21), des Kanals (20), einstellbar ist.

14. Vorrichtung nach den Ansprüchen 1 und 5-13, **dadurch gekennzeichnet, dass** die Innenseite des Reibbodens (13) mit einer Profilierung oder einer aufgerauten und/oder beschichteten Oberfläche versehen werden kann.

15. Vorrichtung nach Anspruch 1, **dadurch gekennzeichnet, dass** der Rotor (11) und der Reibboden (13) durch einen Rotor (34) und ein Reibband (30) ersetzt werden.

16. Vorrichtung nach den Ansprüchen 1-13 und 15, **dadurch gekennzeichnet, dass** der Rotor (34) von einem Mantel (35) aus Gummi oder Kunststoff umgeben ist.

17. Vorrichtung nach den Ansprüchen 1-13,15 und 16, **dadurch gekennzeichnet, dass** die Rollen (31) und (32) und die Führungsrollen (33) auf einem Gestell (29) gelagert sind, welches eingangsseitig, z. B. über eine Exzenterscheibe (22), verstellbar ist.

18. Vorrichtung nach den Ansprüchen 1, 15, 16, und 17, **dadurch gekennzeichnet, dass** das Gestell (29) ausgangsseitig, z. B. über einen Hydrozylinder (24), verstellbar angeordnet ist.

19. Vorrichtung nach den Ansprüchen 1-13 und 15-18, **dadurch gekennzeichnet, dass** das Reibband (30) auf der Laufseite mit Profilen besetzt ist.

20. Vorrichtung nach den Ansprüchen 1-13 und 15-19, **dadurch gekennzeichnet, dass** das Reibband (30), über einen variabel einstellbaren Antrieb mit unterschiedlichen Geschwindigkeiten umlaufen kann.

21. Vorrichtung nach den Ansprüchen 1-13 und 15-20, **dadurch gekennzeichnet, dass** mindestens eine der Rollen (31), (32) oder der Führungsrollen (33), als Spannrolle ausgeführt ist.

22. Vorrichtung nach den Ansprüchen 1, 15 und nach einem oder mehreren der vorstehenden Ansprüche, **dadurch gekennzeichnet, dass** der Rotor (11 oder 34) mit einstellbaren, unterschiedlichen Drehzahlen angetrieben wird.
